# FASCICULE DE BREVET EUROPEEN

(11) **EP 0 954 177 B1**
(45) Date de publication et mention de la délivrance du brevet: **15.08.2012**
(21) Numéro de dépôt: 99400890.2
(22) Date de dépôt: 12.04.1999
(51) Int. Cl.: H04N 7/16

(54) **Dispositif de télévision à péage avec dissuasion de copie**
Gebührenfernsehgerät mit Kopierschutz
Pay-TV apparatus with copy protection

(30) Priorité: 28.04.1998 FR 9805313
(43) Date de publication de la demande: 03.11.1999
(73) Titulaire: Thomson Licensing, 92130 Issy-les-Moulineaux (FR)
(72) Inventeur: Basset, Jean-Claude, 75013 Paris (FR); Birebent, Guy, 78320 Le Mesnil Saint Denis (FR); Gigante, Claude, 91360 Epinay sur Orge (FR)
(74) Mandataire: Huchet, Anne

(56) Documents cités:
- EP-A- 0 763 936
- WO-A-97/23996
- WO-A-97/49238

## Description

L'invention, qui concerne les communications à péage, s'applique notamment à la télévision.

L'opérateur d'un système à péage diffuse des informations "embrouillées", c'est-à-dire modifiées selon un codage spécifique, à travers un milieu de communication choisi, par exemple, voie hertzienne, sans fil (diffusion en continu), diffusion par satellite, micro-ondes (système de distribution micro-ondes multipoint ou local) ou voie filaire.

Un décodeur approprié, loué ou vendu aux clients pour un usage bien délimité, leur permet d'accéder aux informations "désembrouillées", c'est-à-dire en clair.

Les opérateurs tirent leur rémunération de la location ou de la vente du décodeur, et/ou de paiements fondés sur les droits qu'ils accordent à chaque client d'accéder par exemple à un programme donné pendant un temps donné. Le décodeur peut être dédié à un opérateur ou indépendant de celui-ci.

Les techniques actuelles, par exemple magnétoscope ou liaison par câble en télévision, permettent à un client indélicat (individuel ou collectif) de reproduire et/ou rediffuser de façon illicite les données ou programmes en question, une fois décodés. Il existe naturellement des moyens juridiques efficaces permettant d'empêcher cette pratique. Mais la Demanderesse a observé que l'existence de ces protections juridiques n'est pas toujours entièrement dissuasive.

La présente invention a pour but d'améliorer la situation.

La nouvelle proposition repose notamment sur l'observation qu'il est possible d'aménager un décodeur avec un surcoût raisonnable, de sorte que des informations définissant directement ou indirectement le responsable de la reproduction ou rediffusion illicite soient incorporées aux éléments de celle-ci après désembrouillage des informations à péage. Elle repose également sur l'observation complémentaire que cette incorporation peut être réalisée d'une manière qui rende difficile, voire impossible à la quasi-totalité des clients, de supprimer des données ou programmes frauduleux les informations qui s'y trouvent incorporées.

On obtient ainsi un élément matériel de dissuasion important, qui complète heureusement les outils juridiques actuellement disponibles.

On connait déjà des protections contre la copie illégale des programmes de télévision provenant d'un réseau de diffusion.

Par exemple, dans les documents EP-A-0763936 ou WO-A-9749238, des informations de marquage ou de codage sont incorporées au niveau de l'émission des programmes de télévision afin de les identifier ou d'autoriser leur reproduction. Mais, de telles informations sont incorporées avant diffusion des signaux de télévision. Une telle incorporation est de mise en oeuvre complexe puisqu'elle exige un traitement des programmes de télévision avant diffusion, ainsi qu'un traitement desdits programmes de télévision après réception.

WO 97/23996 décrit un système dans lequel « Transmitted Information Labels (TIL) » sont transmis avec les émissions. Les TIL donnent de l'information sur le contenu de l'émission, comme par exemple niveau de violence. Le récepteur peut créer de l'information locale « Local Information Labels (LIL) » basée sur les TIL et les préférences de l'utilisateur. Les LIL sont envoyées vers la télévision en même temps que l'émission. Cependant, le document décrit nullement la possibilité de lier les contenus sortis du récepteur avec l'utilisateur afin de retrouver cet utilisateur en cas d'émission non autorisée du contenu.

Dans « Watermarking of MPEG-2 encoded video without decoding and re-encoding » (SPIE vol. 3020), Frank Hartung et Bernd Girod décrivent un système pour le marquage d'un flux vidéo. Le flux vidéo chiffré est reçu par un récepteur, déchiffré, et une marque « watermark » basée sur un identifiant d'utilisateur est ensuite insérée dans le flux vidéo avant de traiter le signal d'une autre façon. Ceci permet de trouver la source d'un contenu diffusé sans autorisation.

La présente invention concerne un dispositif de communication à péage selon la revendication 1 ou les revendications dépendantes.

D'autres caractéristiques et avantages de l'invention apparaîtront à l'examen de la description détaillée ci-après, ainsi que des dessins annexés, sur lesquels :
- la figure 1 illustre le schéma de principe général d'un dispositif de communication a péage opérant sur des signaux analogiques;
- la figure 2 illustre le schéma de principe général d'un dispositif de communication à péage opérant sur des signaux numériques;
- la figure 3 est un schéma partiellement détaillé d'un mode de réalisation de la présente invention;
- les figures 4A à 4D illustrent schématiquement des exemples d'informations de marquage visibles ou invisibles selon l'invention;
- la figure 5 représente schématiquement l'incrustation ou substitution des informations de marquage dans l'image vidéo selon l'invention; et
- la figure 6 représente schématiquement les moyens constitutifs d'un dispositif de lecture réciproque des informations de marquage selon l'invention.

Bien que le mot "télématique" vise plutôt des communications de données numériques, il est utilisé ici au sens large, c'est-à-dire pour des données qui peuvent être analogiques, au moins en partie. Ces données numériques ou analogiques correspondent à des flux "haut débit" qui peuvent intégrer aussi des transmissions de type INTERNET en clair ou embrouillées, par exemple dans le mode appelé "poussée" pour PUSH.

On appelle "canal de données" l'ensemble des signaux externes dont le décodeur a besoin pour fournir au client les informations en clair qu'il souhaite.

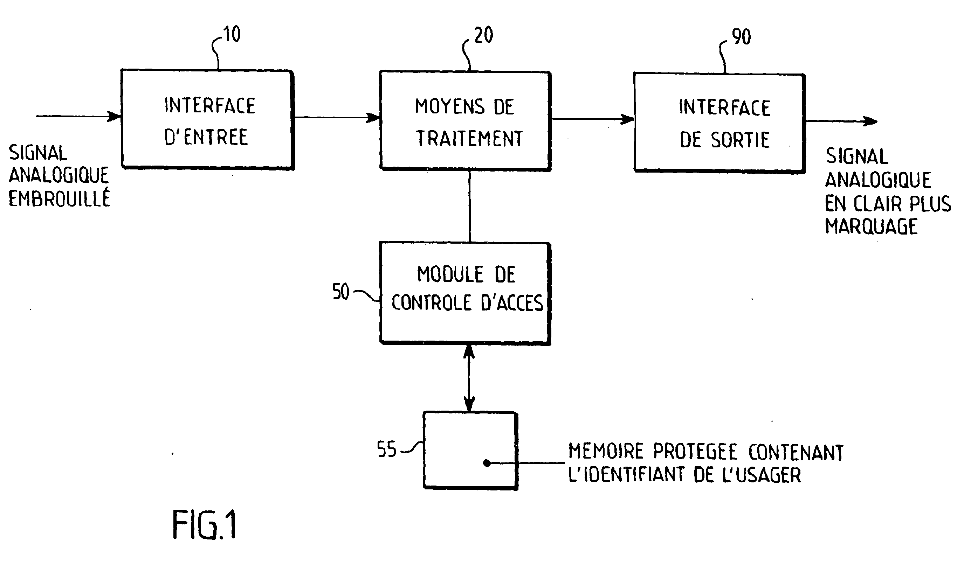

Sur la figure 1, une interface d'entrée reçoit un signal analogique "embrouillé", qui peut être par exemple :
- soit un signal haute fréquence comprenant plusieurs canaux de données télématiques, auquel cas l'interface d'entrée 10 comporte alors un démodulateur, pour passer en fréquence plus basse, et un démultiplexeur, pour séparer les canaux individuels;
- soit directement un signal télématique embrouillé concernant un seul canal, auquel cas l'interface d'entrée 10 comprend simplement des éléments de mise en forme de ce signal.

De façon connue, des moyens de traitement 20 sont capables de transformer les signaux analogiques embrouillés d'un seul canal en signaux désembrouillés, qui sont alors appliqués à l'interface de sortie 90, pour commander par exemple un téléviseur ou un moniteur, dans le cas d'une application vidéo.

Les moyens de traitement 20 opèrent sous la direction d'un module de contrôle d'accès 50 qui, lui-même, coopère avec une mémoire protégée 55 contenant un identifiant de l'usager, auquel correspondent des droits d'accès.

La mémoire 55 peut être par exemple une carte à puce à microprocesseur, ou bien une clé électronique à microprocesseur, ou bien une carte PCMCIA avec processeur sécurisé, ou encore une carte sans contact sécurisée à microprocesseur.

Le mode d'interaction des moyens de traitement 20, du module de contrôle d'accès 50 et de la mémoire protégée 55 est connu des hommes du métier, puisque différentes réalisations de ces fonctions existent à l'heure actuelle. Comme la préservation de ce type de protection implique une divulgation aussi réduite que possible de la manière dont fonctionne le dispositif, il est ici simplement fait référence aux réalisations existantes, que l'on ne décrira pas en détail.

Il convient de remarquer que la transmission des informations peut, pour une même source de diffusion, être émise en clair et à certains instants embrouillée. Dans ce cas, les moyens de traitement comprennent un module (non représenté) pour détecter les périodes d'embrouillage des périodes "en clair". Le marquage que l'on décrira plus en détail ci-après n'est effectué que pendant les périodes de désembrouillage.

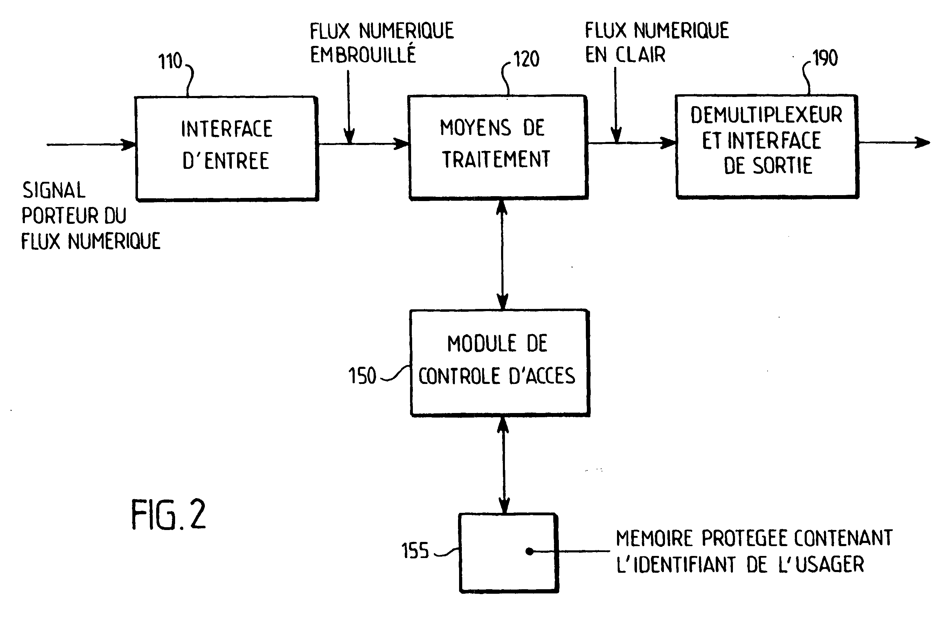

La figure 2 concerne le cas d'un signal numérique. Dans ce mode de réalisation, l'interface d'entrée 110 reçoit un signal porteur du flux numérique, et cette interface d'entrée 110 peut être soit un récepteur/syntoniseur ("tuner") de télévision par câble ou par satellite, soit un coupleur de type ATM (mode de transfert asynchrone ou "Asynchronus Transfer Mode"), ou encore ADSL (ligne d'abonné numérique asymétrique ou "Asymmetric Digital Subscriber Line").

Le flux numérique embrouillé issu de l'interface d'entrée 110 est appliqué aux moyens de traitement 120, qui délivrent en sortie un flux numérique en clair. Comme précédemment, les moyens de traitement 120 opèrent sous la direction du module de contrôle d'accès 150 de la mémoire protégée 155.

L'unité 190 peut comprendre:
- un démultiplexeur, pour extraire du flux numérique en clair les séquences relatives au canal souhaité, et
- l'interface de sortie proprement dite, qui, de façon connue, transforme ces séquences en signaux propres à piloter un téléviseur ou un moniteur.

Les modes de traitement de flux numériques, pour la télévision, sont décrits par exemple dans "La télévision numérique MPEG1 et MPEG2 et les principes du système européen DVB", de Hervé Benoît aux Editions DUNOD, 1996.

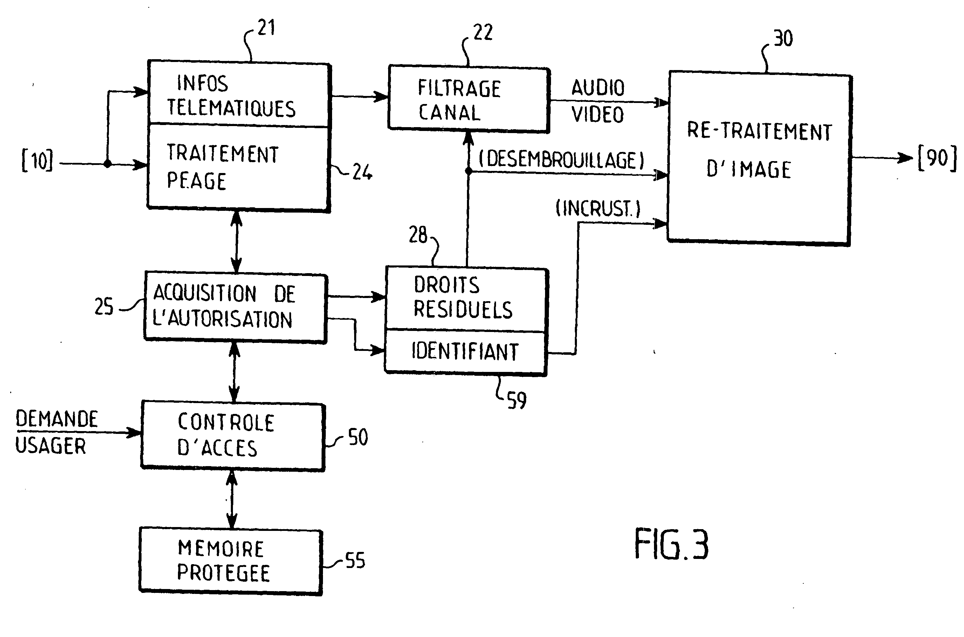

La figure 3 illustre un mode de réalisation de l'invention, dans le cas du dispositif analogique de la figure 1.

Dans les moyens de traitement 20, la figure 3 distingue une unité 21, qui va traiter les informations télématiques elles-mêmes, c'est-à-dire les données (par exemple un programme de télévision) intéressant l'usager, et d'autre part une unité 24 qui prend en charge les fonctions de traitement relatives au péage.

La coopération entre le module de contrôle d'accès 50 et la mémoire protégée 55 est de type classique (protocoles d'identification électronique). Eventuellement, le module de contrôle d'accès 50 peut recevoir directement un ordre de l'usager, qui désigne le programme auquel il souhaite accéder.

Par une coopération également classique entre le module de contrôle d'accès 50 et les fonctions de traitement du péage 24, l'unité 25 détermine si l'autorisation est ou non acquise à l'usager pour le programme qu'il souhaite. On sait que cette coopération peut prendre en compte des signaux reçus: par exemple, si l'usager doit périodiquement payer sa dette à l'opérateur, et ne l'a pas fait, un signal incident destiné spécialement au décodeur de cet usager peut venir bloquer le fonctionnement de ce même décodeur.

Plus généralement, l'unité 25 aura vocation à définir un faisceau d'autorisations pour l'ensemble des canaux disponibles, avec pour chaque canal des droits résiduels, qui peuvent tenir par exemple à un crédit résiduel de l'usager (en paiement ou en temps) auprès du producteur ou du diffuseur du programme.

Une unité 28 va donc appliquer l'autorisation en question, associée à la désignation du canal souhaité par l'usager, et assortie le cas échéant des droits résiduels, pour actionner une unité 22 de filtrage, capable d'isoler le canal choisi parmi l'ensemble des informations télématiques issues de l'unité 22.

En sortie de l'unité 22, on dispose donc des informations audio-vidéo (et synchronisation) correspondant à un seul canal, que l'on applique ici à une unité de re-traitement d'image 30.

Dans ce mode de réalisation, c'est cette unité 30 qui est chargée du désembrouillage, lequel peut être différent pour chacun des canaux transmis. Cette fonction est réalisée d'une manière connue, qui ne sera pas décrite en détail ici, pour la même raison que précédemment.

La présente invention prévoit simplement qu'à l'unité de re-traitement 30 est incorporée une fonction d'incrustation, tandis qu'aux unités 25 et 28 sont associées une unité 59 capable de stocker un identifiant, correspondant d'une manière convenue à l'identifiant d'usager. Ce peut être le nom de l'usager lui-même en clair, par exemple. Et, cet identifiant de l'unité 59 est transmis à l'entrée d'incrustation de l'unité de re-traitement 30, de façon que tout ou partie des images se voie incruster le nom de l'usager, de façon permanente ou épisodique.

C'est l'ensemble ainsi obtenu qui est appliqué à l'interface de sortie 90 pour être visualisé sur un récepteur ou un moniteur de télévision.

On sait que les mêmes informations peuvent être enregistrées sur un support magnétique (bande ou disque) par des moyens d'enregistrement choisis; ces informations ainsi enregistrées peuvent être rediffusées par un lecteur adapté aux moyens d'enregistrement. En pareil cas, il y aura un nombre important d'images marquées par le nom du propriétaire du décodeur, ou par une représentation de celui-ci. Par conséquent, tout "rejeu" suspect d'une copie de bande magnétique peut:
- d'abord être aisément diagnostiqué comme frauduleux ou non,
- ensuite, s'il est frauduleux, révéler rapidement quel est le responsable de la fraude.

Ainsi, le système est rendu beaucoup plus dissuasif.

Ceci vaut non seulement pour une copie par magnétoscope, mais aussi en cas de rediffusion, par un moyen quelconque, des images disponibles en sortie du circuit de re-traitement 30.

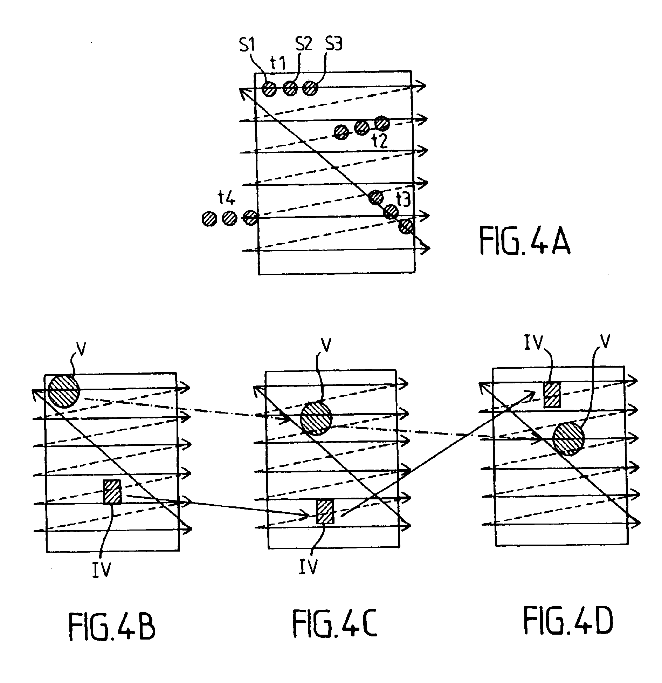

En référence à la figure 4A, on a représenté un exemple d'informations de marquage visibles, individualisées en S1 à S3 sur une image de type monotrame. Les informations de marquage sont de position variable afin d'éviter d'être occultées facilement par un masque logique en position fixe. Par exemple, au temps t1 du balayage, les informations de marquage S1 à S3 sont positionnées sur les pixels sur le début de la première ligne de balayage. Les informations de marquage se propagent ensuite sur les autres pixels selon le balayage temporel t2, t3, t4, etc.

En référence aux figures 4B à 4D, on a représenté d'autres exemples d'informations de marquage visibles V ou invisibles

IV (que l'on décrira plus en détail ci-après) sur une image de type multitrame entrelacée.

Sur la figure 4B, l'information de marquage visible V est sur les pixels correspondant au début de la 1ère ligne de la trame paire K.

Sur la figure 4C, l'information de marquage visible V est sur les pixels correspondant au milieu de la seconde ligne de la trame impaire K+1.

Sur la figure 4D, l'information de marquage visible V est sur les pixels correspondant au milieu de la troisième ligne de la trame paire K+2.

En variante ou en complément, l'unité de re-traitement 30 peut incorporer aux signaux audio et vidéo une représentation invisible (directement) de l'identifiant d'usager (information de marquage IV en référence aux figures 4B à 4D). En pratique, l'information de marquage invisible IV se propage sur les pixels selon le balayage des signaux vidéo, comme décrit pour les informations de marquage visibles.

Ceci peut être fait:
- en ajoutant des informations numériques ou analogiques au niveau des synchronisations de lignes et de trames, où de la place reste disponible à cet effet, et/ou
- en incorporant à l'image de manière diffuse des informations correspondant à l'identifiant de l'usager.

Il existe de nombreuses manières d'appliquer le second procédé :
- substituer en des positions fixes (absolues ou relatives) une pluralité de points de l'image par d'autres points calculés à partir de l'image et des informations de marquage, ces derniers points formant ensemble une représentation numérique de l'identifiant de l'usager;
- faire de même sur plusieurs images consécutives en répartissant les différents bits de l'information d'usager sur ces différentes images;
- ajouter des pixels légèrement en dehors de la zone d'image utile (ce qui est en fait une variante de l'utilisation des temps de synchronisation);

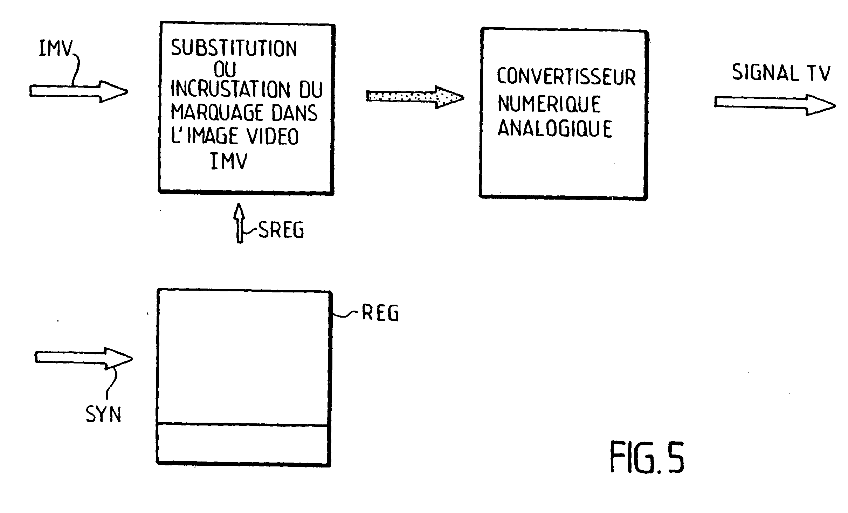

En référence à la figure 5, le signal numérique de l'image IMV est disponible en provenance de la chaîne analogique (après convertisseur analogique/numérique et désembrouillage) ou de la chaîne numérique (après décompression MPEG).

A ce signal IMV est associé une synchronisation trame, ligne et point SYN qui sert de contrôle temporel à un registre ou mémoire REG contenant l'image des informations de marquage V ou IV décrites en références aux figures 4B à 4D. La sortie SREG du registre sert à modifier l'image vidéo IMV. La modification peut être par substitution selon laquelle le signal lumineux vidéo IMV est remplacé par un signal lumineux correspondant à l'information de marquage V ou IV. En pratique, le remplacement s'effectue pixel par pixel.

La modification peut aussi être par incrustation selon laquelle le signal lumineux correspondant à l'information de marquage V ou IV s'ajoute au signal vidéo IMV. Un niveau de transparence permet une incrustation "légère" de l'information de marquage. Le pixel ainsi modifié est comparé à l'ensemble des pixels voisins pour évaluer l'état de l'image.

Après modification de l'image vidéo, une opération de conversion numérique/analogique est prévue pour la transformer en signal TV.

Dans le cas où la modification est de type invisible à l'oeil humain, cette modification est de type substitution dans la mesure où le niveau du signal perturbateur de ce marquage ne joue pas sur la représentation visuelle.

Dans le cas où l'information n'est pas incorporée en clair à l'image, l'identifiant du responsable d'une recopie frauduleuse ne peut être obtenu que par utilisation d'un dispositif de lecture réciproque. Toutefois, l'homme du métier comprendra que ce dispositif de lecture réciproque peut être fabriqué à un coût raisonnable. Toujours pour les mêmes raisons que précédemment, il est simplement considéré ici que la réalisation d'un tel dispositif de lecture réciproque est accessible à l'homme du métier. Cette réalisation dépendra naturellement du mode choisi pour l'incorporation discrète des informations à l'image.

Dans le cas de la figure 2, l'homme du métier sait qu'il est possible de procéder de même.

S'agissant d'une information que l'on désire faire apparaître en clair, les moyens de re-traitement vont en ce cas incorporer au flux numérique une séquence numérique correspondant à cette partie en clair de l'information de marquage destinée à être visible par incrustation.

S'agissant au contraire d'informations d'un marquage que l'on désire invisible, la séquence incorporée dans le flux numérique sera alors modifiée en conséquence, d'une manière qui ici encore dépend des choix effectués a priori pour l'incorporation des informations de marquage sous forme diffuse dans l'image. Toujours pour les mêmes raisons que précédemment, il n'est pas utile de préciser ici davantage la manière de procéder, dès lors que l'homme du métier est en mesure de réaliser de telles séquences numériques.

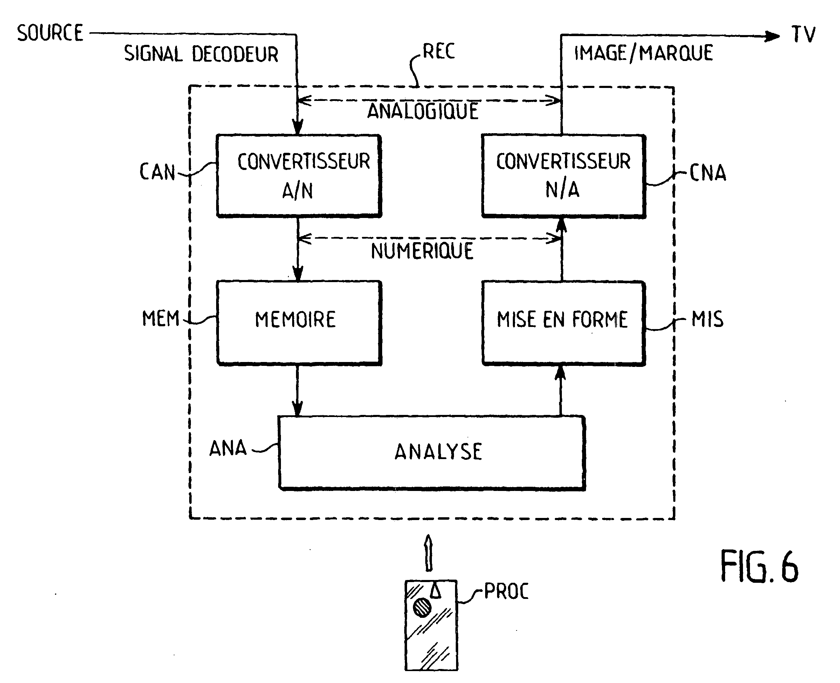

Dans le cas où les informations de marquage ne sont pas directement visibles, il est utile de fournir un dispositif de lecture réciproque (figure 6) qui permet l'analyse du signal vidéo et de visualiser le résultat sur un téléviseur ou moniteur.

En référence à la figure 6, le dispositif de lecture réciproque REC est mis en série entre le dispositif formant décodeur et le récepteur de télévision. Le dispositif de lecture REC comprend un convertisseur analogique/numérique CAN qui transforme en numérique le signal issu du décodeur pour le stocker dans une mémoire MEM. Avantageusement, la capacité de la mémoire MEM est choisie pour stocker autant d'images qu'occupent les informations de marquage. Le stockage en mémoire est réalisé point par point (pixel) pour former une image virtuelle.

Un analyseur d'images ANA traite le contenu de la mémoire MEM pour rechercher par analyse séquentielle l'image virtuelle (formée de points lumineux) afin de retrouver l'information de marquage.

Le dispositif d'analyse ANA comprend un processeur de sécurité PROC, qui comporte l'information de marquage. Par exemple, le processeur de sécurité PROC utilise une carte à puce amovible, pour rendre mobile le dispositif de lecture réciproque et protéger l'information de marquage de la copie.

Des moyens de mise en forme MIS sont prévus pour restituer au moins deux images après analyse. La première image correspond à une image vidéo épurée, c'est-à-dire dépourvue des informations de marquage et la seconde image correspond aux informations de marquage.

Un convertisseur numérique/analogique CNA restitue ensuite la trame vidéo.

Une variante intéressante de l'invention consiste à interdire le désembrouillage si la fonction d'incrustation n'est pas réalisée. Ceci peut se produire par un aménagement convenable de l'unité de re-traitement 30. En pratique, il suffit de conditionner la réalisation du désembrouillage par l'existence d'un ordre simultané d'incrustation de l'identifiant de l'usager, au moins au moment où cette fonction est désirée.

On sait par ailleurs que l'ensemble des fonctions illustrées sur les figures 3 à 6 sont en principe incorporées à des circuits matériellement protégés et difficilement accessibles à l'usager. Ceci contribue naturellement à assurer la sécurité obtenue selon la présente invention.

Il convient de remarquer que la présente invention s'applique aussi aux signaux vidéo n'ayant pas de trames de synchronisation, comme les signaux de visualisation de micro-ordinateurs pour lesquels des informations de marquage ou de tatouage peuvent être incorporées de façon similaire à celle décrite ci-avant de manière à conserver le tatouage au cours de la conversion informatique/télévision.

## Revendications

1. Dispositif de communication à péage, du type comprenant:
- une interface d'entrée (10) pour recevoir des signaux embrouillés, portant des informations sujettes à péage,
- des moyens de traitement (20) aptes à procéder à la conversion de ces signaux embrouillés en des signaux désembrouillés, susceptibles d'utilisation directe,
- un module de contrôle d'accès (50), ce module comprenant une mémoire protégée (55) contenant un identifiant d'usager, associé à des droits d'accès, et conditionnant le fonctionnement des moyens de traitement,
- des moyens de service (59) pour établir au moins une information de marquage reliée à l'identifiant d'usager, et
- des moyens de re-traitement (30), associés aux moyens de traitement (20), pour incorporer répétitivement cette information de marquage aux signaux désembrouillés, afin de tatouer, après désembrouillage, lesdits signaux désembrouillés,
**caractérisé en ce que** le désembrouillage des signaux est interdit à défaut de l'incorporation de l'information de marquage.

2. Dispositif selon la revendication 1, **caractérisé en ce que** la mémoire protégée (55) est en partie au moins contenue dans un support amovible.

3. Dispositif selon l'une des revendications 1 et 2, **caractérisé en ce que** les moyens de service (59) établissent une partie au moins de l'information de marquage comme une représentation en clair de l'identifiant d'usager, et **en ce que** les moyens de re-traitement (30) incorporent cette partie en clair de l'information de marquage aux signaux désembrouillés, d'une manière directement perceptible.

4. Dispositif selon l'une des revendications 1 à 3, **caractérisé en ce que** les moyens de service (59) établissent une partie au moins de l'information de marquage comme une représentation indirecte de l'identifiant d'usager, et **en ce que** les moyens de re-traitement (30) incorporent cette partie indirecte de l'information de marquage aux signaux désembrouillés, d'une manière non directement perceptible.

5. Dispositif selon la revendication 3, **caractérisé en ce que**, les signaux désembrouillés étant des signaux vidéo analogiques, les moyens de re-traitement (30) y incorporent ladite partie en clair de l'information de marquage par incrustation ou substitution.

6. Dispositif selon la revendication 4, **caractérisé en ce que**, les signaux désembrouillés étant des signaux vidéo analogiques, les moyens de re-traitement (30) y incorporent ladite partie indirecte de l'information de marquage dans des éléments non visibles des dits signaux vidéo, tels que les retours lignes ou les retours trame.

7. Dispositif selon la revendication 4, **caractérisé en ce que**, les signaux désembrouillés étant des signaux vidéo analogiques, les moyens de re-traitement (30) y incorporent ladite partie indirecte de l'information de marquage sous forme diffuse prédéfinie dans la partie visible de l'image.

8. Dispositif selon la revendication 3, **caractérisé en ce que**, les signaux désembrouillés étant un flux numérique destiné à être appliqué à un démultiplexeur audio-vidéo, les moyens de re-traitement (30) incorporent dans le flux numérique une séquence numérique correspondant à la partie en clair de l'information de marquage destinée à être visible par incrustation ou substitution.

9. Dispositif selon la revendication 4, **caractérisé en ce que**, les signaux désembrouillés étant un flux numérique destiné à être appliqué à un démultiplexeur audio-vidéo, les moyens de re-traitement (30) incorporent dans le flux numérique une séquence numérique relative à l'information de marquage sous forme diffuse prédéfinie dans la partie visible de l'image.

10. Dispositif selon l'une des revendications précédentes, **caractérisé en ce qu'**il comprend un dispositif de lecture réciproque (REC) propre à retrouver les informations de marquage incorporées aux signaux désembrouillés.

## Claims

1. Paying communication device, of the type comprising:
- an input interface (10) for receiving scrambled signals, carrying information subject to paying,
- processing means (20) capable of proceeding with the conversion of these scrambled signals into unscrambled signals, able to be used directly,
- an access control module (50), this module comprising a protected memory (55) containing a user identifier, associated with access rights, and conditioning the operation of the processing means,
- service means (59) for establishing at least one marking information connected to the user identifier, and
- reprocessing means (30), associated with the processing means (20), for repetitively incorporating this marking information in the unscrambled signals, so as to watermark, after unscrambling, said unscrambled signals,
**characterized in that** the unscrambling of the signals is prohibited if no marking information is incorporated.

2. Device according to claim 1, **characterized in that** the protected memory (55) is at least partly contained in a removable support.

3. Device according to one of claims 1 and 2, **characterized in that** the service means (59) establish at least one part of the marking information as an unencrypted representation of the user identification, and **in that** the reprocessing means (30) incorporate this unencrypted part of the marking information in the unscrambled signals, in a directly perceivable manner.

4. Device according to one of claims 1 to 3, **characterized in that** the service means (59) establish at least one part of the marking information as an indirect representation of the user identifier, and **in that** the reprocessing means (30) incorporate this indirect part of the marking information in the unscrambled signals, in a manner not directly perceivable.

5. Device according to claim 3, **characterized in that** the unscrambled signals being analogue video signals, the reprocessing means (30) incorporate into it said unencrypted part of the marking information by picture in picture or substitution.

6. Device according to claim 4, **characterized in that** the unscrambled signals being analogue video signals, the reprocessing means (30) incorporate into it said indirect part of the marking information in non-visible elements of the video signals, such as line returns or frame returns.

7. Device according to claim 4, **characterized in that** the unscrambled signals being analogue video signals, the reprocessing means (30) incorporate into it said indirect part of the marking information in a predefined broadcast form in the visible part of the picture.

8. Device according to claim 3, **characterized in that** the unscrambled signals being a digital stream intended to be applied to an audio-video demultiplexer, the reprocessing means (30) incorporate into the digital stream a digital sequence corresponding to the unencrypted part of the marking information intended to be visible by picture in picture or substitution.

9. Device according to claim 4, **characterized in that** the unscrambled signals being a digital stream intended to be applied to an audio-video demultiplexer, the reprocessing means (30) incorporate into the digital stream a digital sequence relating to the marking information in a predefined broadcast form in the visible part of the picture.

10. Device according to one of the previous claims, **characterized in that** it comprises a reciprocal read device (REC) able to find the marking information incorporated into the unscrambled signals.

## Patentansprüche

1. Vorrichtung zur Gebührenkommunikation des Typs mit:
- einer Eingangsschnittstelle (10) für den Empfang von verwürfelten Signalen, die gebührenpflichtige Informationen übertragen,
- Verarbeitungsmitteln (20), die geeignet sind, diese verwürfelten Signale in direkt verwendbare entwürfelte Signale umzusetzen,
- einem Modul für die Zugriffssteuerung (50), wobei dieses Modul einen geschützten Speicher (55) umfasst, der eine Zugriffsberechtigungen zugeordnete Teilnehmerkennung enthält, und die Funktionsweise der Verarbeitungsmittel bedingt,
- Servicemitteln (59), um mindestens eine mit der Teilnehmerkennung verbundene Kennzeichnungsinformation zu erstellen, und
- den Verarbeitungsmitteln (20) zugeordneten Weiterverarbeitungsmitteln (30), um diese Kennzeichnungsinformation in die entwürfelten Signale repetitiv zu integrieren, um die entwürfelten Signale nach Entwürfelung mit einem Wasserzeichen zu versehen, **dadurch gekennzeichnet, dass** die Signalentwürfelung verboten ist, wenn die Kennzeichnungsinformation nicht integriert ist.

2. Vorrichtung nach Anspruch 1, **dadurch gekennzeichnet, dass** der geschützte Speicher (55) zumindest teilweise in einem abnehmbaren Träger enthalten ist.

3. Vorrichtung nach einem der Ansprüche 1 und 2, **dadurch gekennzeichnet, dass** die Servicemittel (59) mindestens einen Teil der Kenzeichnungsinformation als eine Klartext-Darstellung der Teilnehmerkennung erstellen und dass die Weiterverarbeitungsmittel (30) diesen Klartextteil der Kennzeichnungsinformation unmittelbar wahrnehmbar in die entwürfelten Signale integrieren.

4. Vorrichtung nach einem der Ansprüche 1 bis 3, **dadurch gekennzeichnet, dass** die Servicemittel (59) mindestens einen Teil der Kenzeichnungsinformation als eine indirekte Darstellung der Teilnehmerkennung erstellen und dass die Weiterverarbeitungsmittel (30) diesen indirekten Teil der Kennzeichnungsinformation nicht unmittelbar wahrnehmbar in die entwürfelten Signale integrieren.

5. Vorrichtung nach Anspruch 3, **dadurch gekennzeichnet, dass** bei entwürfelten Signalen, die sich als analoge Videosignale darstellen, die Weiterverarbeitungsmittel (30) den Klartextteil der Kennzeichnungsinformation durch Einblendung oder Substitution darin integrieren.

6. Vorrichtung nach Anspruch 4, **dadurch gekennzeichnet, dass** bei entwürfelten Signalen, die sich als analoge Videosignale darstellen, die Weiterverarbeitungsmittel (30) den indirekten Teil der Kennzeichnungsinformation in nicht sichtbaren Elementen der Videosignale, wie Zeilenumbrüchen oder Frame-Umbrüchen, darin integrieren.

7. Vorrichtung nach Anspruch 4, **dadurch gekennzeichnet, dass** bei entwürfelten Signalen, die sich als analoge Videosignale darstellen, die Weiterverarbeitungsmittel (30) den indirekten Teil der Kennzeichnungsinformation in einer diffusen, in dem sichtbaren Teil des Bildes vorgegebenen Form darin integrieren.

8. Vorrichtung nach Anspruch 3, **dadurch gekennzeichnet, dass** bei entwürfelten Signalen, die sich als ein digitaler Strom darstellen, der dazu bestimmt ist, einem Audio/Video-Demultiplexer zugeführt zu werden, die Weiterverarbeitungsmittel (30) eine digitale Sequenz, die dem Klartextteil der Kennzeichnungsinformation entspricht, der dazu bestimmt ist, durch Einblendung oder Substitution sichtbar zu sein, in den digitalen Strom integrieren.

9. Vorrichtung nach Anspruch 4, **dadurch gekennzeichnet, dass** bei entwürfelten Signalen, die sich als ein digitaler Strom darstellen, der dazu bestimmt ist, einem Audio/Video-Demultiplexer zugeführt zu werden, die Weiterverarbeitungsmittel (30) eine die Kennzeichnungsinformation betreffende digitale Sequenz in einer diffusen, in dem sichtbaren Teil des Bildes vorgegebenen Form in den digitalen Strom integrieren.

10. Vorrichtung nach einem der vorhergehenden Ansprüche,
**dadurch gekennzeichnet, dass** sie eine Vorrichtung zum gegenseitigen Lesen (REC) umfasst, die geeignet ist, die in die entwürfelten Signale integrierten Kennzeichnungsinformationen wieder zu finden.
